# EUROPEAN PATENT APPLICATION

(11) **EP 4 502 690 A1**
(43) Date of publication of application: **05.02.2025**
(21) Application number: 23189512.9
(22) Date of filing: 03.08.2023
(51) Int. Cl.: G02B 6/44

(54) **SPLICE TRAY ADAPTER AND ORGANISER**

(71) Applicant: Corning Research and Development Corporation, Corning, NY 14831 (US)
(72) Inventor: Kreczmer, Wojciech, Hickory NC, 28601 (US); Klak, Robert Tomasz, Hickory NC, 28601 (US); Zappek, Andreas, Hickory NC, 28601 (US); McKinney, Larry, Hickory NC, 28601 (US)
(74) Representative: Reddie & Grose LLP

(57) **Abstract**

A splice tray adapter for holding splice trays within a splice tray organiser is disclosed. The splice tray adapter comprises a first side and a second side. The first side comprises one or more mounts of a first type for mounting one or more splice trays of a first type. The second side comprises one or more mounts of a second type for mounting one or more splice trays of a second type. A splice tray organiser for receiving a splice tray adapter for holding splice trays is also disclosed. The splice tray organiser is configured to receive the splice tray adapter in either a first position or a second position. Corresponding systems and methods are also disclosed.

## Description

### TECHNICAL FIELD

This disclosure relates to the field of passive optical hardware and fiber-optic apparatuses. In particular, the technology of the disclosure relates to fiber optic apparatuses for managing and connecting fiber optic cables including a splice tray adapter and a splice tray organizer as well as corresponding systems and methods.

### BACKGROUND

Fiber-optic networks allow information to be transmitted via optical signals transmitted through special glass cables known as optical fibers. Compared with traditional copper wiring, optical fibers allow transmission over greater distances with substantially less signal loss, provide a greater bandwidth, and do not suffer from electrical interference. Fiber-optic networks are particularly useful when providing long-distance communication and high bandwidth, so called "super-fast", broadband internet.

Fiber optic terminals for telecommunication networks are designed with different solutions and technologies for the fiber management section, which typically rely on the use of splice trays that retain and protect a splice between two or more fiber optic cables. There are a great variety of splice trays available on the market and different splice tray organizers are required for each type of splice tray. This variety of splice trays and splice tray organisers increases the complexity and cost of installing and maintaining fiber optic networks, and presents an opportunity for errors between customers and suppliers of fiber optic equipment regarding the requirements of the customer and the compatibility of products of the provider. It is also common for a customer to require a new or bespoke splice tray to meet their specific needs. Typically, this would require the provider to develop a complete new range of products for the customer, including new splice trays and a new splice tray organiser. This is both costly and time consuming for both the producer and the customer.

Embodiments of the present invention may address one or more of these problems, amongst others.

### SUMMARY OF INVENTION

The invention is defined in the independent claims, to which the reader is now directed. Preferred or advantageous features are set out in the dependent claims.

According to a first aspect of the invention, a splice tray adapter for holding splice trays within a splice tray organiser is disclosed. The splice tray adapter comprises a first side and a second side. The first side comprises one or more mounts of a first type for mounting one or more splice trays of a first type. The second side comprises one or more mounts of a second type for mounting one or more splice trays of a second type.

Providing a splice tray adapter that has both mounts of a first type and mounts of a second type means that a common splice tray organiser can be used with splice trays of both a first type and a second type. This reduces the complexity of the overall optical fiber system and installation process, as well as enabling easier customisation. For example, a new splice tray adapter can be developed rather than a whole new splice tray organiser, if a customer desires a new type of splice tray. Having two sides with different splice tray mounts means that it is convenient for an engineer to select the correct mounts required when inserting the splice tray adapter into a splice tray organiser.

Optionally, the splice tray adapter comprises a substantially planar body. In this case, the first side and the second side may, in particular, be opposite sides of the substantially planar body.

Having the first side and the second side on opposite sides of a substantially a planar body can simplify the process of installing the splice tray adapter in a splice tray organiser and make it clearer for the engineer installing it, as the engineer can quickly and easily select the correct side needed, whilst the other side remains out of the way on the other side of the planar body.

Optionally, the splice tray adapter is configured to be reversibly insertable into the splice tray organiser to enable mounting of either splice trays of the first type or splice trays of the second type in the splice tray organiser.

Having the splice tray adapter reversibly insertable into the splice tray organiser provides a convenient and efficient way for the engineer installing the splice tray adapter in a splice tray organiser to install the splice tray adapter so as to enable mounting of the desired type of splice tray.

Optionally, the splice tray adapter is configured to be removably insertable into the splice tray organiser.

The splice tray adapter being removably insertable into a splice tray organiser means that the splice tray organiser can be reused if different splice trays are to be installed at a later date (and in fact so may the splice tray adapter, if the different splice trays are those mountable to the opposite side of the splice tray adapter to the side previously used for mounting splice trays). Furthermore, it means that if an engineer were to install the splice tray adapter into the splice tray organiser in the incorrect orientation, for example, presenting the wrong side of the splice tray adapter for receiving splice trays, then the engineer can correct this mistake by removing the splice tray adapter and reinserting it into the splice tray organiser in the correct position.

Optionally, the splice tray adapter comprises a first adapter interface and a second adapter interface for retaining the splice tray adapter within the splice tray organiser.

The first adapter interface and the second adapter interface can enable the splice tray adapter to be inserted into and retained within a splice tray organiser. Utilising two adapter interfaces can provide a secure means for retaining the splice tray adapter. The interfaces may comprise a number of different features such as protrusions or recesses configured to engage with corresponding features on a splice tray organiser. The first adapter interface and the second adapter interface may interact with a first organiser interface and a second organiser interface respectively on a splice tray organiser to retain the splice tray adapter in the splice tray organiser.

For example, one or both of the first adapter interface and the second adapter interface may comprise one or more latching components configured to engage with a corresponding one or more slots in the splice tray organiser. In some cases, one or both of the first adapter interface and the second adapter interface may comprise two latching components. The latching components may comprise protrusions (e.g., a bar or ridge) configured to interact with corresponding recesses (e.g., a slot or hole) in the splice tray organiser to retain the splice tray adapter in place in the splice tray organiser through the action of friction and/or the elastic properties of the splice tray adapter and/or the splice tray organiser.

Optionally, the splice tray adapter (e.g., in particular the first adapter interface and the second adapter interface) is configured such that the splice tray adapter cannot be inserted into a splice tray organiser in a position other than a first position or a second position. In the first position, the first side is accessible for mounting splice trays of the first type, whereas in the second position the second side is accessible for mounting splice trays of the second type. Preferably, in each of the first position and the second position, only one side of the splice tray adapter is accessible for mounting splice trays.

Preventing the splice tray adapter from being inserted into a splice tray organiser in an incorrect position (i.e., not the first position or the second position) helps with the ease of installation and reduces the burden on the engineer installing the splice tray adapter.

Optionally, one or both of the first adapter interface and the second adapter interface comprise one or more ribs configured to structurally support the one or more latching components.

Providing ribs to structurally support the latching components increases the strength of the splice tray adapter and can increase its longevity and reusability.

Optionally, the splice tray adapter comprises 4, 6, 8, 10, 12, 16 or 24 mounts of the first type. Optionally, the splice tray adapter comprises 4, 6, 8, 10, 12, 16 or 24 mounts of the second type. The number of mounts of the first type and the second type is preferably the same, but this need not be the case.

Having multiple mounts on the splice tray adapter enables a number of splice trays to be compactly mounted in the splice tray organiser.

Optionally, the mounts of the first type and the mounts of the second type are arranged such that the mounts of the first type have the same position relative to a splice tray organiser when the splice tray adapter is inserted into the splice tray organiser in the first position as the mounts of the second type when the splice tray adapter is inserted into the splice tray organiser in the second position.

Arranging the mounts of the first type and the second type on the splice tray adapter in this manner, such that when the splice tray adapter is inserted into the splice tray organiser in either position then the mounts are have the same position relative to the splice tray arranger, means that guide features on the splice tray organiser will still be aligned with the splice trays regardless of the type of splice tray used. This is important to ensure that the optical fibers are protected and retained in the correct positions as they pass through the splice tray organiser and the splice tray adapter.

Optionally, the first adapter interface and the second adapter interface are configured to prevent the splice tray adapter being inserted into a splice tray organiser in a position other than a first position in which only the first side is accessible for mounting splice trays of the first type or a second position in which only the second side is accessible for mounting splice trays of the second type.

Optionally, the splice tray adapter comprises a first pair of opposing edges defining the sides of the splice tray adapter and a second pair of opposing edges defining the ends of the splice tray adapter. The one or more mounts on the first and second sides are configured to mount one or more splice trays such that the splice trays extend between the sides of the splice tray adapter.

Optionally, the first side comprises two or more mounts of the first type and/or the second side comprises two or more mounts of the second type such that two or more splice trays can be stacked between the ends of the splice tray adaptor on the first side and/or the second side.

Arranging multiple mounts in parallel in this manner allows for splice trays to be efficiently stacked within a splice tray organiser in which the splice tray adapter is installed.

Optionally, the first adapter interface and the second adapter interface are disposed at the ends of the splice tray.

Providing the first adapter interface and the second adapter interface at the ends of the splice tray adapter means that the splice tray adapter can be securely retained within a splice tray organiser without interfering with the splice tray adapters capacity for having splice trays mounted to it, which are typically mounted to the splice tray adapter so that they are extended across the splice tray adapter.

Optionally, the first adapter interface comprises two latching components disposed at one end of the splice tray adapter and wherein the second adapter interface comprises two latching components disposed at an opposite end of the splice tray adapter.

Having two latching interfaces disposed at each end of the splice tray adapter provides for a secure means for retaining the splice tray adapter within a splice tray organiser without interfering with the capacity of the splice tray adapter to have splice trays mounted to it.

According to a second aspect of the invention, a splice tray organiser for receiving a splice tray adapter for holding splice trays is provided. The splice tray organiser is configured to receive the splice tray adapter in either a first position or a second position. In this first position, mounts of a first type are accessible for mounting splice trays of a first type on the splice tray adapter, whereas in the second position mounts of a second type are accessible for mounting splice trays of a second type on the splice tray adapter.

Having a splice tray organiser not have integral mounts for a splice tray, but instead be configured to receive a splice tray adapter in a first position or a second position, enables a greater flexibility and reusability of a common splice tray organiser with different types of splice tray.

Optionally, the splice tray organiser comprises a first organiser interface and a second organiser interface for retaining the splice tray adapter within the splice tray organiser.

The first organiser interface and the second organiser interface can enable a splice tray adapter to be inserted into and retained within the splice tray organiser. Utilising two adapter interfaces can provide a secure means for retaining a splice tray adapter in the splice tray organiser. The interfaces may comprise a number of different features such as protrusions or recesses configured to engage with corresponding features on a splice tray adapter. The first organiser interface and the second organiser interface may interact with a first adapter interface and a second adapter interface respectively on a splice tray adapter to retain the splice tray adapter in the splice tray organiser.

For example, one or both of the first organiser interface and the second organiser interface comprise one or more slots configured to engage with a corresponding one or more latching components on a splice tray adapter. In some cases, one or both of the first organiser interface and the second organiser interface may comprise two recesses or slots. The recess or slots may comprise holes or openings in the splice tray organiser (which may be closed, meaning fully circumscribed by portions of the splice tray organiser, or open, meaning partially circumscribed by portions of the splice tray organiser) to interact with corresponding protrusions (e.g., a bar or ridge) on the splice tray adapter to retain the splice tray adapter in place in the splice tray organiser through the action of friction and/or the elastic properties of the splice tray adapter and/or the splice tray organiser.

Optionally, the splice tray organiser comprises one or more ridges configured to engage with an edge of a splice tray adapter for retaining the splice tray adapter. The ridge may be a part of the first organiser interface or the second organiser interface, or may define a new interface.

Providing one or more ridges can, in particular, interact with an edge of a splice tray adapter to restrict its movement in a given direction and thus to help securely retain the splice tray adapter in the splice tray organiser.

Optionally, the splice tray organiser is configured such that the splice tray adapter is reversibly insertable into the splice tray organiser to enable mounting of splice trays of the first type or splice trays of the second type in the splice tray organiser.

Having the splice tray organiser configured such that a splice tray adapter is reversibly insertable into the splice tray organiser provides a convenient and efficient way for the engineer installing the splice tray adapter in the splice tray organiser to install the splice tray adapter so as to enable mounting of the desired type of splice tray.

Optionally, the splice tray organiser is configured such that when the splice tray adapter is inserted into the splice tray organiser in a first position only a first side of the splice tray adapter is accessible for mounting splice trays and when the splice tray adapter is inserted into the splice tray organiser in a second position only a second side is accessible for mounting splice trays.

A splice tray organiser that presents allows only one side of a splice tray adapter inserted into the splice tray organiser to be accessible for mounting splice trays means that the splice tray organiser can be used with a variety of types of splice tray while reducing the possibility of the wrong splice tray being used, because only the side of the splice tray adapter configured for mounting the correct type of splice tray is accessible.

Optionally, the splice tray organiser comprises a recess for accommodating one or more mounts on a second side of a splice tray inserted into the splice tray organiser.

As splice tray adapters comprise mounts to enable them to receive splice trays, to enable the splice tray organiser to receive a splice tray adapter in different position, a recess can be provided. This can provide a space to accommodate the mounts on the side that is not accessible for mounting splice trays on. Preferably, the recess should be sized and positioned on the splice tray organiser such that it can accommodate mounts of both a first type and a second type, enabling a splice tray adapter having mounts of the first type one a first side and of the second type on a second side to be inserted either way around.

Optionally, the splice tray organiser further comprises a plurality of channels for guiding fiber optic cables. The splice tray organiser is configured to retain a splice tray adapter such that each of the plurality of channels for guiding fiber optic cables will, in use, guide one or more optical fibers into or out of a corresponding splice tray mounted on the splice tray adapter.

Providing a plurality of channels for guiding fiber optic cables ensures that the optical fibers are protected and retained in the correct positions as they pass through the splice tray organiser and the splice tray adapter.

According to a third aspect of the invention, a system is provided comprising the splice tray adapter of the first aspect and the splice tray organiser of the second aspect.

According to a fourth aspect of the invention, a method of installing a splice tray in a splice tray organiser is provided. The method comprises: providing a splice tray adapter according to the first aspect; providing a splice tray organiser according to the second aspect; and determining that a splice tray of a first type is to be installed in the splice tray organiser or determining that a splice tray of a second type is to be installed in the splice tray organiser. When it is determined that a splice tray of the first type is to be installed, the method further comprises: providing a splice tray of the first type; inserting the splice tray adapter in the splice tray organiser in a first position; and mounting the splice tray of the first type in the splice tray adapter. When it is determined that a splice tray of the first type is to be installed, the method further comprises: providing a splice tray of the second type; inserting the splice tray adapter in the splice tray organiser in a second position; and mounting the splice tray of the second type in the splice tray adapter.

In this manner, an engineer can install a desired splice tray in a splice tray organiser, with the splice tray organiser being common to a number of different splice trays having different mounts. This reduces the complexity of the installation, requires fewer components to be manufactured and carried by the engineer, and makes the installation process cheaper and more efficient.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1A illustrates a first side of a splice tray adapter according to aspects of the invention;
Figure 1B illustrates a second side of a splice tray adapter according to aspects of the invention;
Figure 2A illustrates a first adapter interface of a splice tray adapter according to aspects of the invention;
Figure 2B illustrates a latching component of a first adapter interface of a splice tray adapter according to aspects of the invention;
Figure 2C illustrates another view of a first adapter interface of a splice tray adapter according to aspects of the invention;
Figure 2D illustrates another view of a latching component of a first adapter interface of a splice tray adapter according to aspects of the invention;
Figure 3A illustrates a second adapter interface of a splice tray adapter according to aspects of the invention;
Figure 3B illustrates a latching component of a second adapter interface of a splice tray adapter according to aspects of the invention;
Figure 3C illustrates another view of a second adapter interface of a splice tray adapter according to aspects of the invention;
Figure 3D illustrates another view of a latching component of a second adapter interface of a splice tray adapter according to aspects of the invention;
Figure 4 illustrates a splice tray organiser according to aspects of the invention;
Figure 5 illustrates an insertion region of a splice tray organiser according to aspects of the invention;
Figure 6A illustrates a second organiser interface according to aspects of the invention;
Figure 6B illustrates a second organiser interface according to aspects of the invention;
Figure 7A illustrates a system according to aspects of the invention comprising a splice tray adapter inserted into a splice tray organiser in a first position;
Figure 7B illustrates a system according to aspects of the invention comprising a splice tray adapter inserted into a splice tray organiser in a second position;
Figure 8A illustrates an interaction between a splice tray adapter and a splice tray organiser according to aspects of the invention;
Figure 8B illustrates an interaction between a splice tray adapter and a splice tray organiser according to aspects of the invention;
Figure 9A illustrates an interaction between a splice tray adapter and a splice tray organiser according to aspects of the invention;
Figure 9B illustrates an interaction between a splice tray adapter and a splice tray organiser according to aspects of the invention;
Figure 10A illustrates a splice tray of a first type installed in a splice tray organiser according to aspects of the invention;
Figure 10B illustrates a plurality of splice trays of a first type installed in a splice tray organiser according to aspects of the invention;
Figure 11A illustrates a splice tray of a second type installed in a splice tray organiser according to aspects of the invention;
Figure 11B illustrates a plurality of splice trays of a second type installed in a splice tray organiser according to aspects of the invention;
Figure 12 illustrates a method of installing a splice tray in a splice tray organiser according to aspects of the invention.

Like components across different figures are represented by like reference numerals.

### DETAILED DESCRIPTION OF THE INVENTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

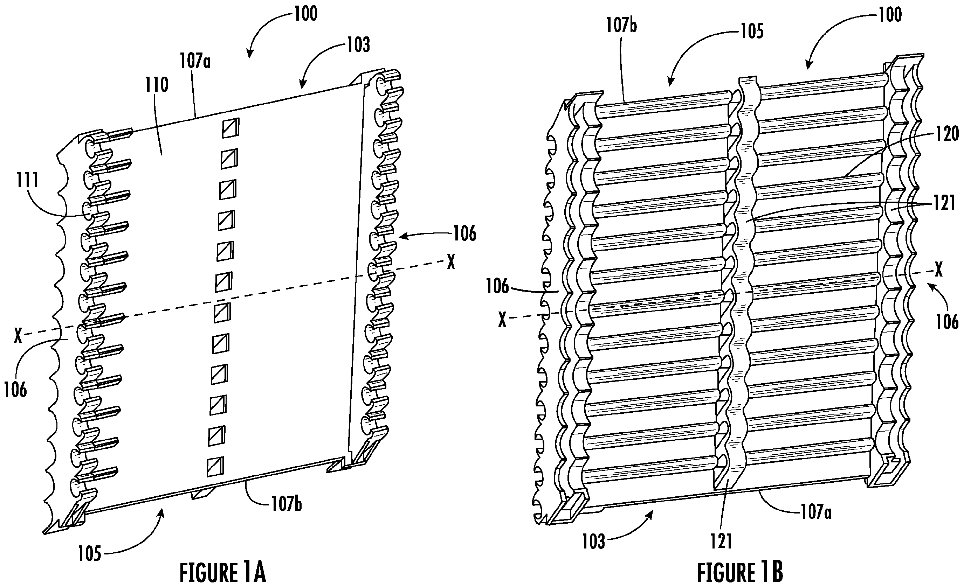

A splice tray adapter will first be described with reference to Figures 1A to 3D.

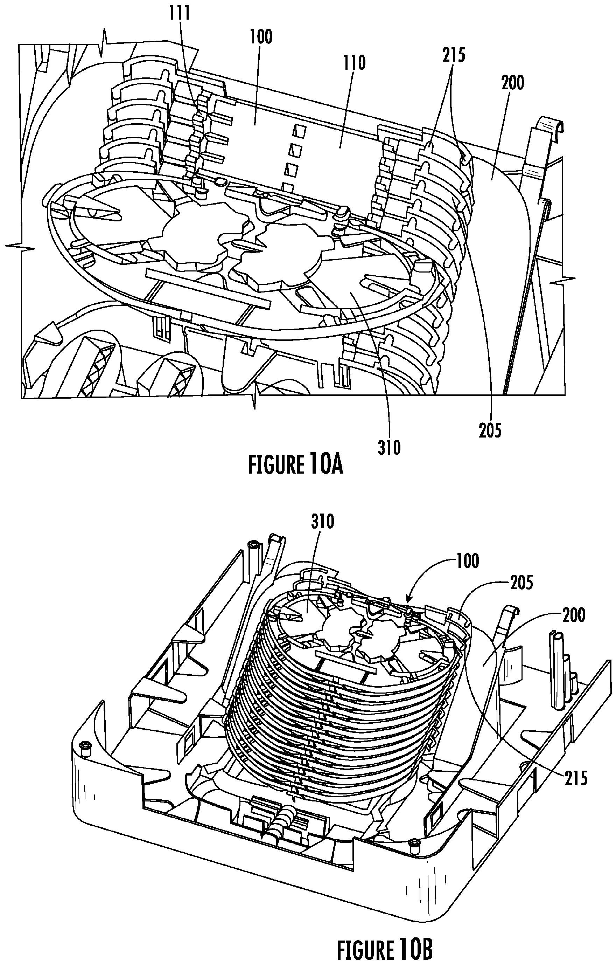

The splice tray adapter 100 is illustrated in Figures 1A and 1B. The splice tray adapter 100 comprises a first side 110, shown in Figure 1A, and a second side 120, shown in Figure 1B. On each of the first side 110 and the second side 120, a plurality of mounts 111, 121 are provided for mounting splice trays 310, 320 (illustrated in Figures 10A to 11B) to the splice tray adapter 100. On the first side 110, mounts of a first type 111 are provided for mounting splice trays of a first type 310. On the second side 120, mounts of a second type 121 are provided for mounting splice trays of a second type 320. The mounts of a first type 111 and the mounts of a second type 121 are not limited herein, and may be any mount known in the art or subsequently developed for mounting a splice tray 310, 320.

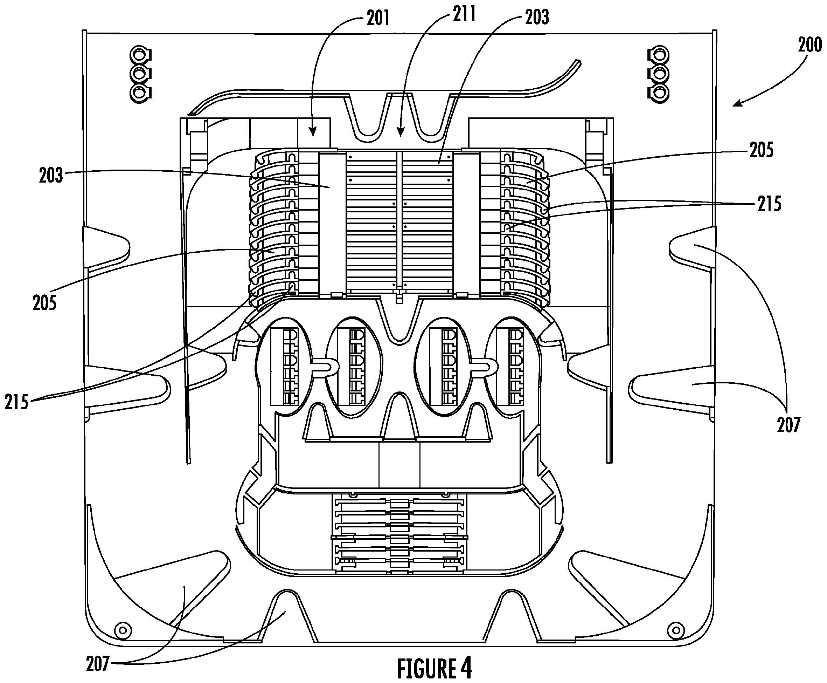

Providing mounts of the first type 111 and mounts of a second type 121 on two sides 110, 120 of a splice tray adapter 100 enables the splice tray adapter 100 to be used for mounting different types of splice trays 310, 320. The splice tray adapter 100 illustrated is configured to be reversible, so that it can be inserted into a splice tray organiser 200 (Figure 4) with either the first side 110 or the second side 120 accessible for mounting splice trays 310, 320. In this way, it enables a common splice tray organiser 200 to be used with different types of splice tray 310, 320.

To enable the splice tray adapter 100 to be retained in a splice tray organiser 200, a first adapter interface 103 and a second adapter interface 105 are provided on the splice tray adapter 100. The first adapter interface 103 and the second adapter interface 105 are configured to engage with a first organiser interface and a second organiser interface respectively on a splice tray organiser 200.

In the example splice tray adapter 100 illustrated in Figures 1A and 1B, the splice tray adapter 100 comprises a substantially planar body. It is generally rectangular in shape with two pairs of opposing edges 106, 107a, 107b. Opposing edges 106 define the sides of the splice tray adapter 100, while opposing edges 107a, 107b define the ends of the splice tray adapter 100. In the illustrated example, the first adapter interface 103 and the second adapter interface 105 are defined at the ends 107a, 107b of the splice tray adapter 100. First adapter interface 103 is at a first end 107a of the splice tray adapter 100, whereas second adapter interface 105 is at a second end 107b of the splice tray adapter 100.

The splice tray adapter 100 illustrated in Figures 1A and 1B comprises 12 mounts of the first type 111 disposed on the first side 110 and 12 mounts of the second type 121 disposed on the second side 120. It will be appreciated that 12 mounts 111, 121 is merely an illustrative embodiment, and that in practice other numbers of mounts 111, 121 may be provided, such as 4, 6, 8, 10, 12, 16 or 24 mounts 111, 121. This will depend upon the type and size of the mount 111, 121 and the size of the splice tray adapter 100, for example.

As can be seen in Figures 1A and 1B, the mounts of the first type 111 and the mounts of the second type 121 are both evenly distributed along the length of the respective first side 110 and second side 120 (i.e., between the first end 107a and the second end 107b). Each individual mount 111, 121 extends laterally between the sides 106 of the splice tray adapter 100. This allows the splice tray adapter 100 to hold a number of splice trays 310, 320 efficiently stacked.

Distributing the mounts of the first type 111 and the mounts of the second type 121 in the same manner on the first side 110 and second side 120 respectively means that splice trays of a first type 310 and splice trays of a second type 320 will both line up with the same portions of a splice tray organiser 200 when in use. This means that features on a splice tray organiser 200 for helping guide and route optical fibers into a splice tray 310, 320 (e.g., such as channels) will be able to effectively guide optical fibers into splice trays of both the first and second type 310, 320.

The first adapter interface 103 and the second adapter interface 105 of the splice tray adapter 100 may comprise one or more features configured to engage with corresponding features on a splice tray organiser 200to retain the splice tray adapter 100 in the splice tray organiser 200. For example, the first adapter interface 103 and the second adapter interface 105 may comprise one or more protrusions, ridges, latches, recesses, slots, holes, and the like.

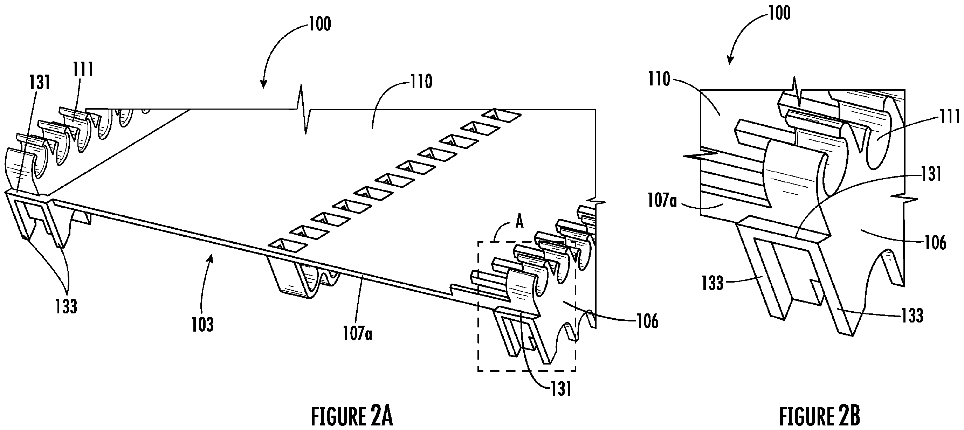

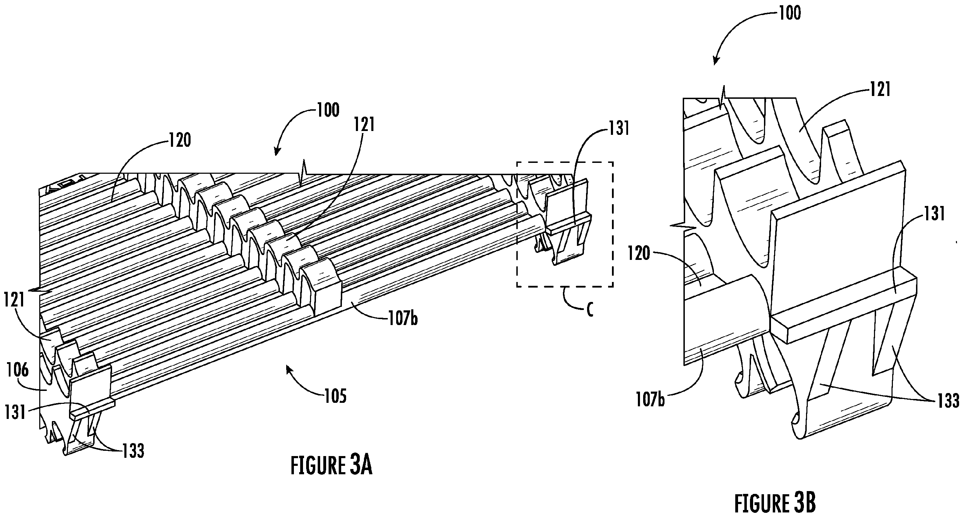

In the example illustrated in Figures 1A and 1B, the first adapter interface 103 and the second adapter interface 105 each comprise two or latching components 131. Figures 2A-2D illustrate the first adapter interface 103 in more detail and the latching components 131 of the first adapter interface 103, and Figure 3A-3D illustrate the second adapter interface 105 in more detail and the latching components 131 of the second adapter interface 105.

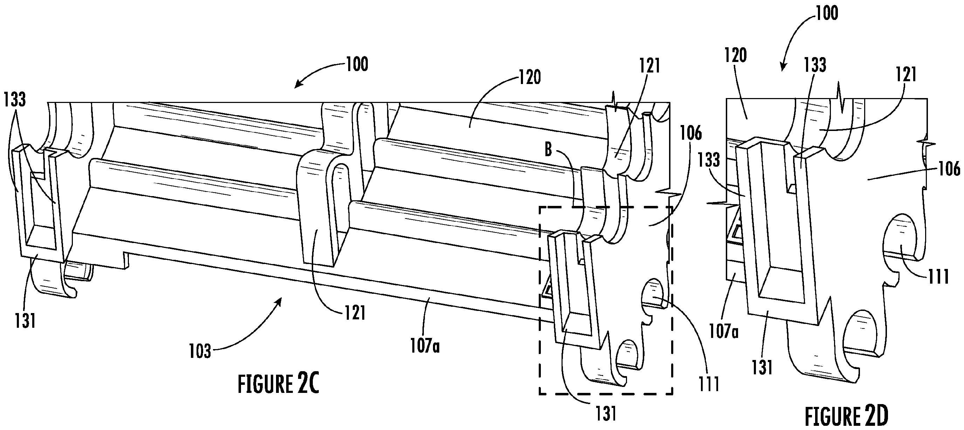

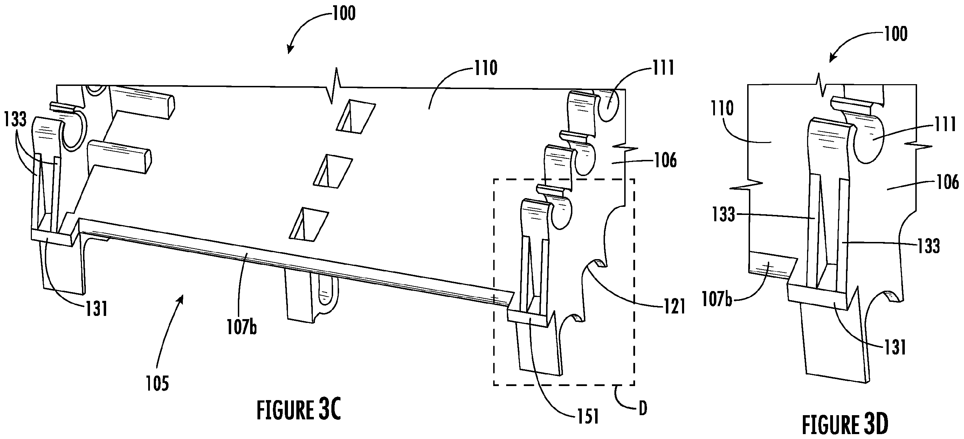

Figure 2A illustrates a view of the first adapter interface 103 looking from the first side 110 of the splice tray adapter 100, with Figure 2B showing a close up of region A in Figure 2A, illustrating the latching component 131 in greater detail. Figure 2C illustrates a view of the first adapter interface 103 looking from the second side 120 of the splice tray adapter 100, with Figure 2D showing a close up of region B in Figure 2C, illustrating the latching component 131 in greater detail. Similarly, Figure 3A illustrates a view of the second adapter interface 105 looking from the second side 120 of the splice tray adapter 100, with Figure 3B showing a close up of region C in Figure 3A, illustrating the latching component 131 in greater detail. Figure 3C illustrates a view of the second adapter interface 105 looking from the first side 110 of the splice tray adapter 100, with Figure 3D showing a close up of region D in Figure 3C, illustrating the latching component 131 in greater detail.

As can be seen in Figures 2A-2D and 3A-3D, the latching components 131 is a bar or ridge 131 that is configured to engage with the edge of a slot of a splice tray organiser 200 to help retain the splice tray adapter 100 in place within the splice tray organiser 200. The first adapter interface 103 and the second adapter interface 105 each comprise two latching components 131, and these are distributed at the ends 107a, 107b of the splice tray adapter 100, in the corners where the ends 107a, 107b meet the sides 106. Therefore, splice tray adapter 100 comprises four latching components 131 in total, disposed at the four corners of the splice tray adapter 100. This provides a secure means for retaining the splice tray adapter 100 in a splice tray organiser 200.

Also illustrated in Figure 2A-2D and 3A-3D are a plurality of ribs 133 of the first adapter interface 103 and the second adapter interface 105. The plurality of ribs 133 provide structural support for the latching components 131. As can be seen, particularly in Figures 2B, 2D, 3B, and 3D, each latching component 131 is supported by two ribs 133, arranged substantially perpendicular to the latching component 131. The structural support provided by the ribs 133 to the latching components 131 increases the strength of the latching components 131. This helps increase the longevity and reusability of the splice tray adapter 100, as the latching component 131 will often be the element of the splice tray adapter 100 under the most strain as the splice tray adapter 100 is inserted and removed from splice tray organisers 200. Furthermore, as splice trays 310, 320 are mounted or removed from the splice tray adapter 100 when the splice tray adapter 100 is inserted in a splice tray organiser 200, this will also place strain on the latching components 131.

With reference again to Figures 1A and 1B, the splice tray adapter 100 is reversible by rotating the splice tray adapter 100 by 180 degrees end over end. That is, by rotating the splice tray adapter 100 by 180 degrees about axis X, passing perpendicularly through sides 106 and equidistant from ends 107a, 107b, the splice tray adapter 100 can changed between a first position and a second position. In the first position, as shown in Figure 1A, the splice tray adapter 100 can be inserted into a splice tray organiser 200 such that the first side 110 is accessible for receiving splice trays 310. In the second position, as shown in Figure 1B, the splice tray adapter 100 can be inserted into a splice tray organiser 200 such that the second side 120 is accessible for receiving splice trays 320. Preferably, in each of the first position and the second position, only one side 110, 120 of the splice tray adapter 100 will be accessible for mounting splice trays 310, 320, preventing splice trays 310, 320 of an incorrect type being installed. To enable this reversibility through rotation, the latching components 131 are suitably arranged such that, when rotated by 180 degrees, the latching components 131 at the first end 107a then occupy the same position as previously occupied by the latching components 131 at the second end 107b, and vice versa.

A splice tray organiser 200 will now be described with respect to Figures 4 to 6B. The splice tray organiser 200 of Figures 4 to 6B may, for example, be used with the splice tray adapter 100 of Figures 1A to 3D.

Figure 4 shows a plan view of a splice tray organiser 200. Splice tray organiser 200 is configured to have a plurality of splice trays 310, 320 mounted within it, and to provide a convenient means by which the splice trays 310, 320 can be organised and retained so as to allow access to the splice trays 310, 320 and the optical fibers and components thereon. Furthermore, the splice tray organiser 200 is also configured to help route and guide optical fibers.

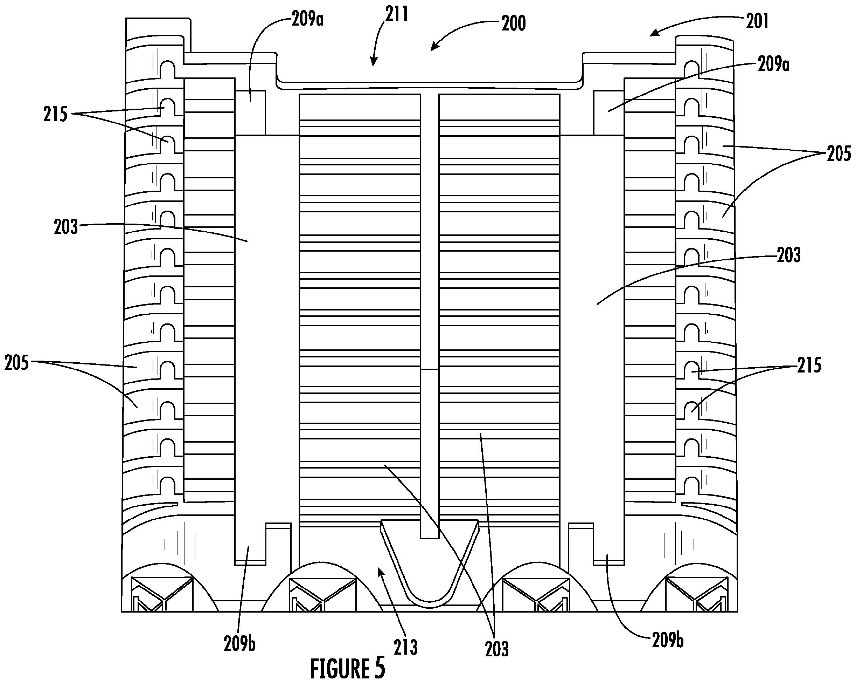

To enable the splice tray organiser 200 to be used with different types of splice trays 310, 320that have different types of mounts, splice tray organiser 200 comprises an insertion region 201 for receiving a splice tray adapter 100, such as splice tray adapter 100 described with reference to Figures 1A to 3D instead of having integral mounts for mounting the splice trays 310, 320. A detailed view of insertion region is illustrated in Figure 5.

Insertion region 201 comprises a first organiser interface 211 and a second organiser interface 213. The first organiser interface 211 and the second organiser interface 213 are configured to cooperate with corresponding adapter interfaces 103, 105 on a splice tray adapter 100 to retain the splice tray adapter 100 within the insertion region 201 of the splice tray organiser 200. The first and second organiser interfaces may comprise one or more slots 209 for cooperating with corresponding latching components on a splice tray adapter 100. Specifically, in the exemplary splice tray organiser 200 of Figure 5, the first organiser interface 211 comprises two slots 209a. Slots 209a are closed slots in that the splice tray organiser 200 defines four sides of the slots 209a and fully circumscribes the slots 209a. The second organiser interface 213 also comprises two slots 209b. Slots 209b, unlike slots 209a, are open slots, in that the splice tray organiser 200 defines three sides of the slots 209b, and the splice tray organiser 200 does not fully circumscribe the slots 209b. The four slots 209 are disposed at or near the four corners of the insertion region 201.

The insertion region 201 also comprises recesses 203. Recesses 203 are for accommodating features of a splice tray adapter 100 that is inserted into the splice tray organiser 200. For example, the splice tray adapter 100 of Figures 1A to 3D has two sides, each with mounts that protrude from the splice tray adapter 100. When inserted, one side will be presented for mounting splice trays 310, 320, whereas the other side will face into the splice tray organiser 200. The recesses 203 of the splice tray organiser 200 can accommodate the protruding mounts of splice tray adapter 100 on the side that is not accessible for mounting splice trays 310, 320.

Disposed around the insertion region 201, splice tray organiser 200 has a number of guide features 205. The guide features 205 are configured to help guide and route optical fibers from the splice tray organiser 200 onto splice trays 310, 320 mounted on a splice tray adapter 100 that is inserted into the splice tray organiser 200. In the illustrated splice tray organiser 200, the guide features 205 comprise channels for guiding optical fibers. The guide features also comprise flanges 215 to enable optical fibers to be inserted into the channels yet to be retained within the channels once inserted. The guide features 205 should preferably be configured so as to align with splice trays 310, 320 mounted on a splice tray adapter 100 inserted into the splice tray organiser 200, so as to provide adequate support and retention for optical fibers passing from the splice tray organiser 200 on the splice trays 310, 320.

Returning to Figure 4, as well as guide features 205, splice tray organiser 200 also comprises a number of optical fiber organising features 207 to help organise and retain optical fibers as they pass through and around splice tray organiser 200. Optical fiber organiser features 207 may, for example, comprise flanges or protrusions.

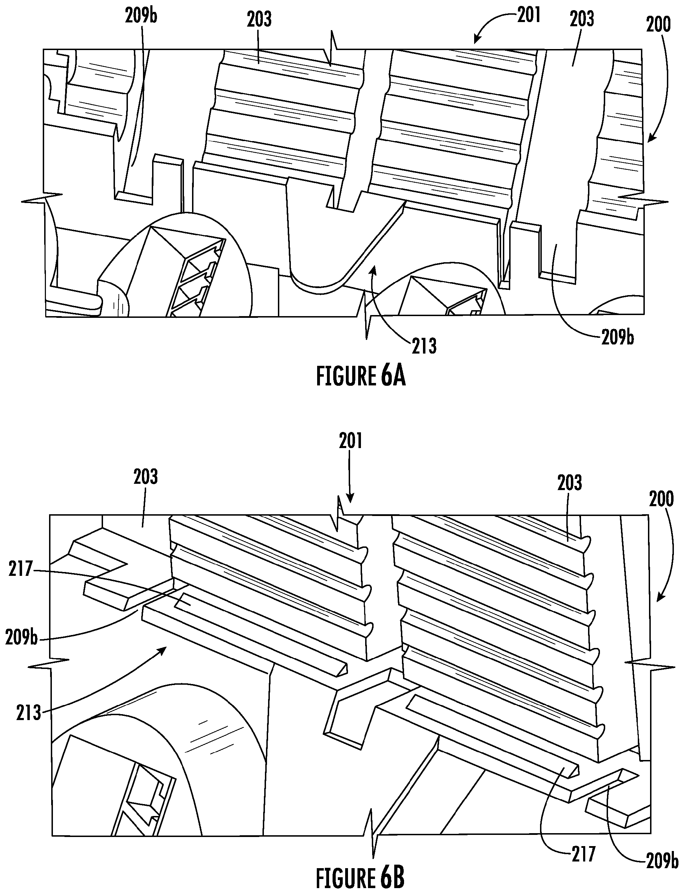

Figures 6A and 6B illustrate a more detailed view of the second organiser interface 213. These Figures illustrate the slots 209b of the second organiser interface 213, as well as recesses 203. It can be seen that a number of different shapes, orientations and sizes of recesses 203 are provided for accommodating protruding features of different splice tray adapters 100.

Looking specifically at Figure 6B, it can be seen that a pair of ridges 217 are provided. Ridges 217 can assist in retaining a splice tray adapter 100 in the splice tray organiser 200. In particular, ridges 217 may engage with an edge 107a, 107b of a splice tray organiser 200 to prevent or restrict movement of the edge beyond the ridge 217, to aid in retaining the splice tray adapter 100 in place within the splice tray organiser 200.

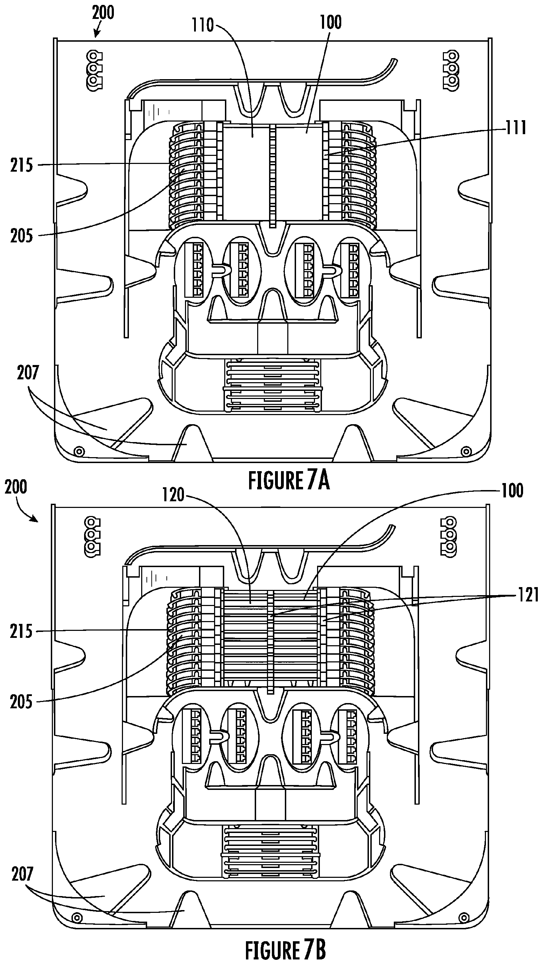

The interaction of a splice tray adapter 100 with a splice tray organiser 200 will now be described in more detail with respect to Figures 7A to 11B, using splice tray adapter 100 of Figures 1A to 3D and the splice tray organiser 200 of Figures 4 to 6B.

Figures 7A and 7B illustrate plan views of a splice tray organiser 200 with a splice tray adapter 100 inserted into it. In Figure 7A, the splice tray adapter 100 is inserted into the splice tray organiser 200 in a first position, in which a first side 110 of the splice tray adapter 100 is accessible for mounting splice trays of a first type 310. In Figure 7B, the splice tray adapter 100 is inserted into the splice tray organiser 200 in a second position, in which a second side 120 of the splice tray adapter 100 is accessible for mounting splice trays of a second type 320. The setup illustrated in Figure 7A can be converted into the setup illustrated in Figure 7B by removing the splice tray adapter 100 from the splice tray organiser 200 and rotating it by 180 degrees about axis X (Figures 1A and 1B), as described above, and then reinserting it into the splice tray organiser 200.

When the splice tray adapter 100 is inserted into the splice tray organiser 200 in the first position, the first side 110 is facing up (i.e., accessible), whereas the second side 120 is facing down (i.e., inaccessible), as can be seen in Figure 7A. In this configuration, the mounts of the first type 111 are presented to an engineer which means that splice trays of a first type 310 can be mounted in the splice tray organiser 200. The mounts of the second type 121, which are on the second side 120, are hidden in the recesses of the splice tray organiser 200 and are inaccessible. Splice trays of the second type 320 cannot, therefore, be mounted in the splice tray organiser 200 when the splice tray adapter 100 is inserted into the splice tray organiser 200 in the first position.

Conversely, when the splice tray adapter 100 is inserted into the splice tray organiser 200 in the second position, the second side 120 is facing up (i.e., accessible), whereas the first side 110 is facing down (i.e., inaccessible), as can be seen in Figure 7B. In this configuration, the mounts of the second type 121 are presented to an engineer which means that splice trays of a second type 320 can be mounted in the splice tray organiser 200. The mounts of the first type 111, which are on the first side 110, are hidden in the recesses of the splice tray organiser 200 and are inaccessible. Splice trays of the first type 310 cannot, therefore, be mounted in the splice tray organiser 200 when the splice tray adapter 100 is inserted into the splice tray organiser 200 in the second position.

In this way, the splice tray adapter 100 and the splice tray organiser 200 can both enable different splice trays 310, 320 to be mounted within the splice tray organiser 200 while also ensuring that splice trays 310, 320 of an incorrect type cannot be mounted within the splice tray organiser 200.

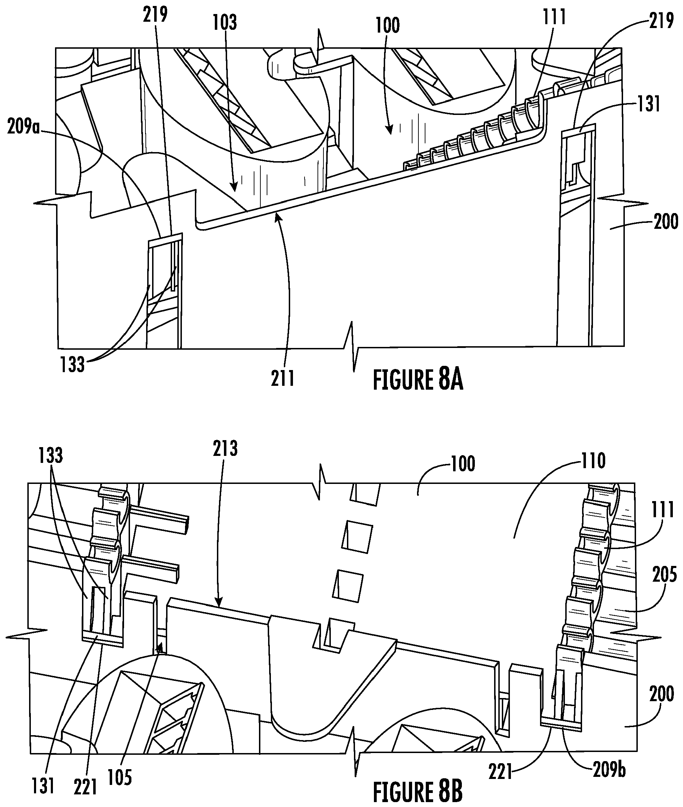

Figures 8A and 8B illustrate detail views of aspects of the splice tray adapter 100 and the splice tray organiser 200 when the splice tray adapter 100 is mounted in the splice tray organiser 200 in the first position (as in Figure 7A).

Figure 8A illustrates how, in the first position, the first adapter interface 103 interacts with the first organiser interface 211 to help retain the splice tray adapter 100 in the splice tray organiser 200. As shown, latching components 131 of the first adapter interface 103 are received within slots 209a and interact with the upper edge 219 (as illustrated in Figure 8A) of slot 209a to give rise to a latching effect to help retain the splice tray adapter 100 in place in the splice tray organiser 200 by friction and/or the elastic properties of the splice tray adapter 100 and/or the splice tray organiser 200. The slots 209a of the splice tray organiser 200 and the ribs 133 of the splice tray adapter 100 are arranged such that the ribs 133 fit within the slots 209a. As illustrated, the ribs 133 abut the edges of the slots 209a which further helps to align the splice tray adapter 100 within the splice tray organiser 200.

Figure 8B illustrates how, in the first position, the second adapter interface 105 interacts with the second organiser interface 213 to help retain the splice tray adapter 100 in the splice tray organiser 200. As shown, components 131 of the second adapter interface 105 are received within slots 209b and interact with the lower edge 221 (as illustrated in Figure 8B) of slot 209b to give rise to a latching effect to help retain the splice tray adapter 100 in place in the splice tray organiser 200 by friction and/or the elastic properties of the splice tray adapter 100 and/or the splice tray organiser 200. The slots 209b of the splice tray organiser 200 and the ribs 133 of the splice tray adapter 100 are arranged such that the ribs 133 fit within the slots 209b. As illustrated, the ribs 133 abut an edge of the slots 209b which further helps to align the splice tray adapter 100 within the splice tray organiser 200.

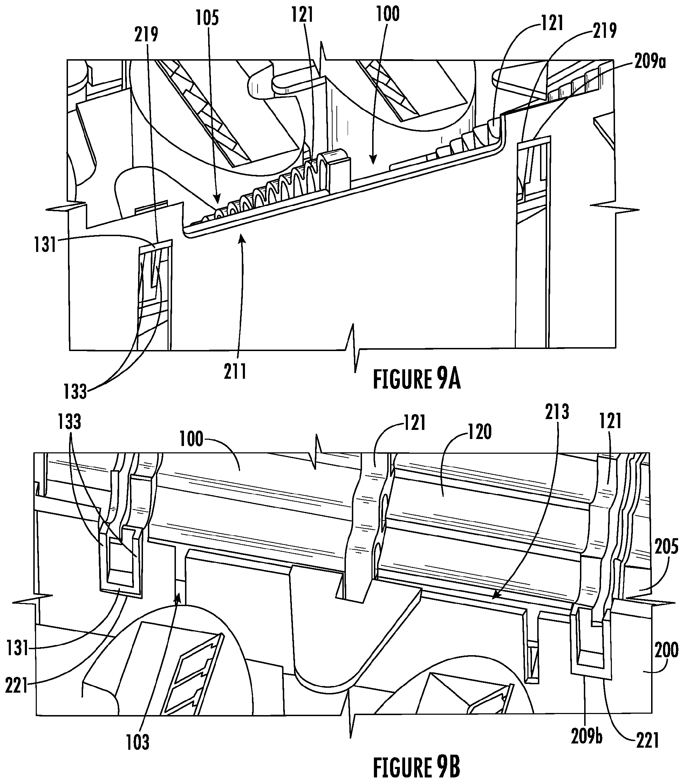

Turning now to Figures 9A and 9B, detailed views of aspects of the splice tray adapter 100 and the splice tray organiser 200 when the splice tray adapter 100 is mounted in the splice tray organiser 200 in the second position (as in Figure 7B) are illustrated.

Figure 9A illustrates how, in the second position, the second adapter interface 105 interacts with the first organiser interface 211 to help retain the splice tray adapter 100 in the splice tray organiser 200. As shown, latching components 131 of the second adapter interface 105 are received within slots 209a and interact with the upper edge 219 (as illustrated in Figure 9A) of slot 209a to give rise to a latching effect to help retain the splice tray adapter 100 in place in the splice tray organiser 200 by friction and/or the elastic properties of the splice tray adapter 100 and/or the splice tray organiser 200. The slots 209a of the splice tray organiser 200 and the ribs 133 of the splice tray adapter 100 are arranged such that the ribs 133 fit within the slots 209a. As illustrated, the ribs 133 abut an edge of the slots 209a which further helps to align the splice tray adapter 100 within the splice tray organiser 200.

Figure 9B illustrates how, in the second position, the first adapter interface 103 interacts with the second organiser interface 213 to help retain the splice tray adapter 100 in the splice tray organiser 200. As shown, latching components 131 of the first adapter interface 103 are received within slots 209b and interact with the lower edge 221 (as illustrated in Figure 9B) of slot 209b to give rise to a latching effect to help retain the splice tray adapter 100 in place in the splice tray organiser 200 by friction and/or the elastic properties of the splice tray adapter 100 and/or the splice tray organiser 200. The slots 209b of the splice tray organiser 200 and the ribs 133 of the splice tray adapter 100 are arranged such that the ribs 133 fit within the slots 209b. As illustrated, the ribs 133 abut the edges of the slots 209b which further helps to align the splice tray adapter 100 within the splice tray organiser 200.

When the splice tray adapter 100 is inserted into the splice tray organiser 200, the splice tray organiser 200 can then have splice trays 310, 320 mounted therein. Figures 10A to 11B illustrate how splice trays can be mounted, using splice tray adapter 100 of Figures 1A to 3D and the splice tray organiser 200 of Figures 4 to 6B.

Figure 10A illustrates the splice tray adapter 100 of Figures 1A to 3D arranged in a first position in the splice tray organiser 200 of Figures 4 to 6B, as illustrated in Figure 7A, with a splice tray of a first type 310 mounted. The splice tray of a first type 310 is mounted to the mounts of a first type 110 disposed on the first side 110 of the splice tray adapter 100, which is inserted into the splice tray organiser 200. Figure 10B illustrates the same set up, but with each a splice tray of the first type 310 mounted in each corresponding mount of a first type 110 of the splice tray adapter 100. As discussed herein, the splice trays of the first type 310 substantially obscure the view of the splice tray adapter 100 in Figure 10B.

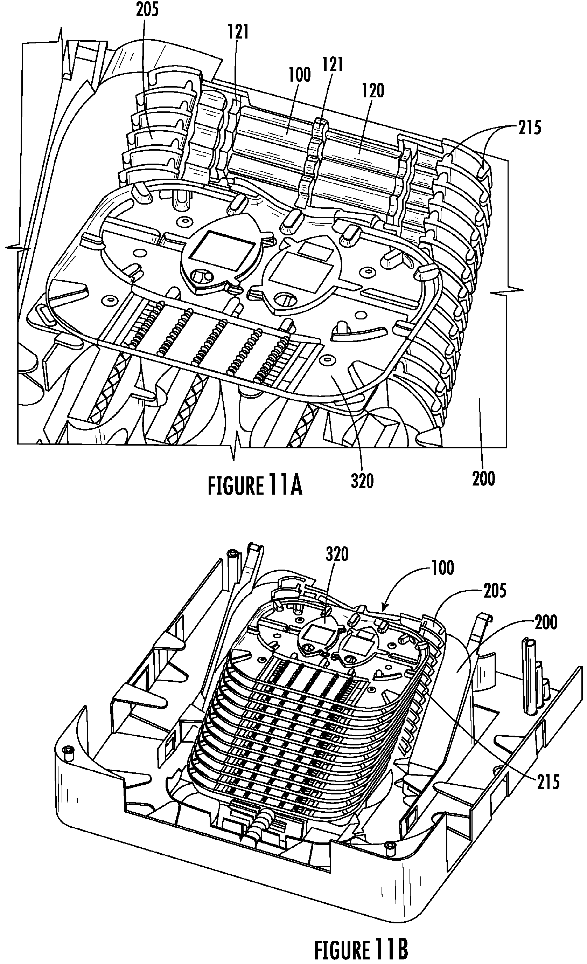

Similarly, Figure 11A illustrates the splice tray adapter 100 of Figures 1A to 3D arranged in a second position in the splice tray organiser 200 of Figures 4 to 6B, as illustrated in Figure 7B, with a splice tray of a second type 320 mounted. The splice tray of a second type 320 is mounted to the mounts of a second type 120 disposed on the second side 120 of the splice tray adapter 100, which is inserted into the splice tray organiser 200. Figure 11B illustrates the same set up, but with each a splice tray of the second type 320 mounted in each corresponding mount of a second type 120 of the splice tray adapter 100. As discussed herein, the splice trays of the second type 320 substantially obscure the view of the splice tray adapter 100 in Figure 11B.

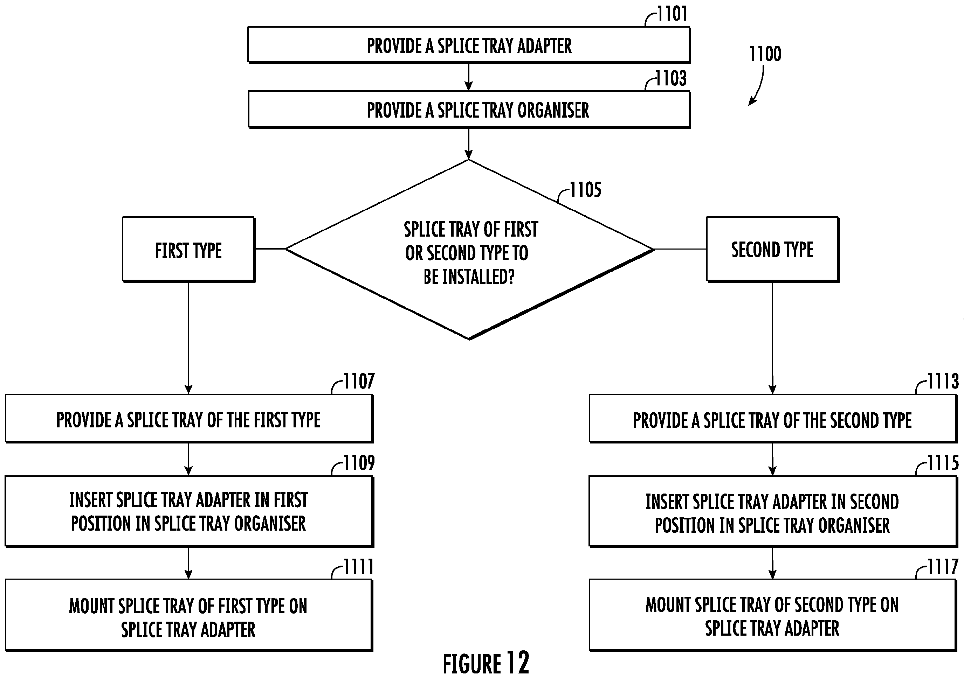

A method 1100 of installing a splice tray 310, 320 into a splice tray organiser 200 is illustrated in Figure 12. For example, the method may be used to install splice trays 310, 320 into the splice tray adapter 100 of Figures 1A to 3D and the splice tray organiser 200 of Figures 4 to 6B.

Method 1100 begins at step 1101, whereby a splice tray adapter 100 is provided. As noted above, the splice tray adapter 100 may, for example, be splice tray adapter 100 illustrated in Figures 1A to 3D.

At step 1103, a splice tray organiser 200 is provided. As noted above, the splice tray organiser 200 may, for example, be splice tray organiser 200 illustrated in Figures 4 to 6B.

At step 1105, it is determined whether a splice tray of a first type 310 is to be installed or whether a splice tray of a second type 320 is to be installed. This will determine how the splice tray adapter 100 is inserted into the splice tray organiser 200.

If it is determined that a splice tray of a first type 310 is to be installed, the method 1100 proceeds to step 1107 where a splice tray of a first type 310 is provided.

At step 1109, the splice tray adapter 100 is inserted into the splice tray organiser 200 in a first position, for example, as illustrated in Figure 7A.

Then, at step 1111, the splice tray of the first type 310 is mounted onto the mounts of a first type 111 of the splice tray adapter 100, as illustrated in Figure 10A. Accordingly, a splice tray of a first type 310 is installed in the splice tray organiser 200.

On the other hand, if it is determined that a splice tray of a second type 320 is to be installed, the method 1100 proceeds to step 1113 where a splice tray of a second type 320 is provided.

At step 1115, the splice tray adapter 100 is inserted into the splice tray organiser 200 in a second position, for example, as illustrated in Figure 7B.

Then, at step 1117, the splice tray of the second type 320 is mounted onto the mounts of a second type 121 of the splice tray adapter 100, as illustrated in Figure 11A. Accordingly, a splice tray of a second type 320 is installed in the splice tray organiser 200.

It will be appreciated that the method 1100 may be repeated a number of times until the desired number of splice trays 310, 320 have been installed in the splice tray organiser 200, or until all of the mounts 111, 121 of the splice tray adapter 100 on a given side (i.e., that are accessible) have a splice tray 310, 320 mounted thereon. Furthermore, whilst the steps of method 1100 have been listed in a certain order, they need not necessarily be performed in this order. In general, it is only necessary that the steps of provided a component are performed prior to the steps of using that component, and that the steps of inserting a splice tray adapter 100 are performed prior to the steps of mounting splice trays 310, 320 on the splice tray adapter 100.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A splice tray adapter for holding splice trays within a splice tray organiser, the splice tray adapter comprising a first side and a second side;
wherein the first side comprises one or more mounts of a first type for mounting one or more splice trays of a first type; and
wherein the second side comprises one or more mounts of a second type for mounting one or more splice trays of a second type.

2. The splice tray adapter of claim 1, wherein the splice tray adapter comprises a substantially planar body, wherein the first side and the second side are opposite sides of the substantially planar body.

3. The splice tray adapter of claim 1 or 2, wherein the splice tray adapter is configured to be reversibly insertable into the splice tray organiser to enable mounting of either splice trays of the first type or splice trays of the second type in the splice tray organiser;
wherein optionally the splice tray adapter is configured to be removably insertable into the splice tray organiser.

4. The splice tray adapter of any preceding claim, further comprising a first adapter interface and a second adapter interface for retaining the splice tray adapter within the splice tray organiser;
wherein optionally one or both of the first adapter interface and the second adapter interface comprise one or more latching components configured to engage with a corresponding one or more slots in the splice tray organiser.

5. The splice tray adapter of claim 4, wherein one or both of the first adapter interface and the second adapter interface comprise one or more ribs configured to structurally support the one or more latching components.

6. The splice tray adapter of any preceding claim, comprising 4, 6, 8, 10, 12, 16 or 24 mounts of the first type and/or 4, 6, 8, 10, 12, 16 or 24 mounts of the second type.

7. The splice tray adapter of any preceding claim, wherein the mounts of the first type and the mounts of the second type are arranged such that the mounts of the first type have the same position relative to a splice tray organiser when the splice tray adapter is inserted into the splice tray organiser in a first position as the mounts of the second type when the splice tray adapter is inserted into the splice tray organiser in a second position.

8. A splice tray organiser for receiving a splice tray adapter for holding splice trays, the splice tray organiser configured to receive the splice tray adapter in either a first position or a second position.

9. The splice tray organiser of claim 8, comprising a first organiser interface and a second organiser interface for retaining the splice tray adapter within the splice tray organiser;
wherein optionally one or both of the first organiser interface and the second organiser interface comprise one or more slots configured to engage with a corresponding one or more latching components on a splice tray adapter.

10. The splice tray organiser of claim 8 or 9, further comprising one or more ridges configured to engage with an edge of a splice tray adapter for retaining the splice tray adapter.

11. The splice tray organiser of any of claims 8 to 10, configured such that the splice tray adapter is reversibly insertable into the splice tray organiser to enable mounting of splice trays of the first type or splice trays of the second type in the splice tray organiser;
wherein optionally the splice tray organiser is configured such that when the splice tray adapter is inserted into the splice tray organiser in a first position only a first side of the splice tray adapter is accessible for mounting splice trays and when the splice tray adapter is inserted into the splice tray organiser in a second position only a second side is accessible for mounting splice trays.

12. The splice tray organiser of claim 11, wherein the splice tray organiser comprises one or more recesses for accommodating one or more mounts on a second side of a splice tray inserted into the splice tray organiser.

13. The splice tray organiser of any of claims 8 to 12, further comprising a plurality of channels for guiding fiber optic cables;
wherein the splice tray organiser is configured to retain a splice tray adapter such that each of the plurality of channels for guiding fiber optic cables will, in use, guide one or more optical fibers into or out of a corresponding splice tray mounted on the splice tray adapter.

14. A system comprising the splice tray adapter of any of claims 1 to 7 and the splice tray organiser of any of claims 8 to 13.

15. A method of installing a splice tray in a splice tray organiser, the method comprising:
providing a splice tray adapter according to any of any of claims 1 to 7;
providing a splice tray organiser according to any of any of claims 8 to 13; and
determining that a splice tray of a first type is to be installed in the splice tray organiser or determining that a splice tray of a second type is to be installed in the splice tray organiser;
wherein when it is determined that a splice tray of the first type is to be installed, the method further comprises:
providing a splice tray of the first type;
inserting the splice tray adapter in the splice tray organiser in a first position; and
mounting the splice tray of the first type on the splice tray adapter; and
when it is determined that a splice tray of the first type is to be installed, the method further comprises:
providing a splice tray of the second type;
inserting the splice tray adapter in the splice tray organiser in a second position; and
mounting the splice tray of the second type on the splice tray adapter.
